# EUROPÄISCHE PATENTSCHRIFT

(11) **EP 1 388 770 B1**
(45) Veröffentlichungstag und Bekanntmachung des Hinweises auf die Patenterteilung: **08.03.2006**
(21) Anmeldenummer: 03102079.5
(22) Anmeldetag: 10.07.2003
(51) Int. Cl.: G05B 19/418

(54) **Verfahren und Vorrichtung zum Vorgeben einer Bearbeitungsreihenfolge von Fertigungslosen**
Method and apparatus for determining the sequence of machining of production lots
Méthode et dispositif pour déterminer la séquence d' usinage des lots de production

(30) Priorität: 05.08.2002 DE 10235816
(43) Veröffentlichungstag der Anmeldung: 11.02.2004
(73) Patentinhaber: Infineon Technologies AG, 81669 München (DE)
(72) Erfinder: Federl, Peter, 93080 Pentling (DE); Gold, Hermann, 93059 Regensburg (DE)
(74) Vertreter: Karl, Frank

(56) Entgegenhaltungen:
- EP-A- 0 679 972
- WO-A-03/050628
- US-A1- 2002 107 599
- US-B1- 6 438 436

## Beschreibung

Die Erfindung betrifft ein Verfahren zum Vorgeben einer Bearbeitungsreihenfolge. Bei dem Verfahren werden Fertigungsdaten vorgegeben, die für mehrere zu bearbeitende Fertigungseinheiten jeweils einen von mindestens zwei verschiedenen Bearbeitungsprozessen angeben. Die Bearbeitungsprozesse lassen sich wahlweise auf einer von mehreren Fertigungsanlagen ausführen.

Eine erste Möglichkeit zum Verteilen der Fertigungseinheiten auf die Fertigungsanlagen besteht darin, einer Bedienperson der Fertigungsanlage die Entscheidung zu überlassen, auf welcher Fertigungsanlage sie welche Fertigungseinheiten bearbeiten möchte.

Aus der EP 0 679 972 A1 ist eine Zuteilungsmaschine bekannt, die Losbewertungszahlen und Maschinenbewertungszahlen berücksichtigt. Beim Festlegen der Maschinenbewertungszahl werden der momentane Maschinenzustand (frei oder belegt), die Bearbeitungskapazität (Anzahl der Wafer) sowie die voraussichtliche Bearbeitungszeit berücksichtigt.

Aus der nicht vorveröffentlichten WO 03/050628 A2 ist ein Verfahren zum Zuteilen von Fertigungslosen auf der Basis von Loszustandsparametern und von Maschinenzustandsparametern bekannt.

Es ist Aufgabe der Erfindung, zum Vorgeben einer Bearbeitungsreihenfolge ein einfaches Verfahren anzugeben, das insbesondere eine Fertigung mit hoher Qualität ermöglicht und insbesondere die Fertigungsanlagen gut ausnutzt. Außerdem sollen ein zugehöriges Programm und eine zugehörige Vorrichtung, insbesondere eine Datenverarbeitungsanlage, angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass einerseits das Einhalten von vorgegebenen Fertigungsterminen eine sehr wichtige Kenngröße für eine Fabrik ist. Dennoch ist es aus anderen Gründen angebracht, z.B. aus Gründen einer hohen Fertigungsqualität, an Stelle der zeitlichen Priorität oder auch zusätzlich zu dieser Priorität andere Kenngrößen bei der Festlegung der Bearbeitungsreihenfolge zu berücksichtigen.

Deshalb werden beim erfindungsgemäßen Verfahren qualitative Prioritätsdaten vorgegeben, die angeben, in welchem Maß mehrere alternativ für die Durchführung der Bearbeitungsprozesse nutzbare Fertigungsanlagen zur Durchführung eines Bearbeitungsprozesses geeignet sind. Beim erfindungsgemäßen Verfahren werden automatisch Reihenfolgedaten abhängig von den Fertigungsdaten und den qualitativen Prioritätsdaten erzeugt. Die Reihenfolgedaten geben bezogen auf die Fertigungsanlagen eine Bearbeitungsreihenfolge für die Bearbeitung der Fertigungseinheiten an. Die Reihenfolgedaten werden in einer Speichereinheit für die spätere Verwendung gespeichert oder auf einer Ausgabeeinheit ausgegeben, z.B. auf einem Drucker oder auf mindestens einem Bildschirm an den Fertigungsanlagen.

Mit anderen Worten werden beim erfindungsgemäßen Verfahren nicht alle zur Ausführung der Bearbeitungsprozesse geeigneten Fertigungsanlagen in gleicher Weise zur Ausführung dieser Bearbeitungsprozesse genutzt. Im Gegenteil dazu wird eine Fertigungseinheit an derjenigen Fertigungsanlage in ihrer Bearbeitungsreihenfolge im Vergleich zu anderen Fertigungsanlagen höher priorisiert, die in der Lage ist, den für die Bearbeitungseinheit anstehenden Bearbeitungsprozess derzeit mit einer höheren Qualität auszuführen, als die alternativ nutzbaren Fertigungsanlagen.

Durch das erfindungsgemäße Verfahren wird gewährleistet, dass Qualitätsaspekte beim Festlegen der Reihenfolge der Bearbeitung berücksichtigt werden können. Dadurch ist es möglich, die Fertigungsqualität um mehrere Prozentpunkte zu erhöhen, beispielsweise lässt sich bei einer Herstellung von integrierten Schaltkreisen die Ausbeute durch den Einsatz des erfindungsgemäßen Verfahrens um mehr als zwei Prozent erhöhen. Durch die automatische Durchführung des Verfahrens muss das Bedienpersonal die Reihenfolge nicht mehr selbst festlegen und wird somit entlastet. Die automatische Vorgabe ist im Vergleich zu einem manuellen Vorgeben fehlerfrei, insbesondere werden Priorisierungen aufgrund von Mitteilungen auf Zetteln vermieden.

Das erfindungsgemäße Verfahren lässt sich grundsätzlich in jeder Fertigung einsetzen, beispielsweise bei der Fertigung von Motoren für Fahrzeuge, bei der Flugzeugherstellung, oder bei der Herstellung integrierter Schaltkreise. Besonders große Verbesserungen der Fertigungsqualität bringt das erfindungsgemäße Verfahren jedoch bei einem Einsatz bei der Herstellung von integrierten Schaltkreisen mit sich, weil dort viele Fertigungsfehler erst am fertigen Schaltkreis erfasst werden können und oft auch die Bestimmung der genauen Fehlerursache erschwert oder unmöglich ist.

Eine Fertigungseinheit kann aus einem zu bearbeitenden Halbzeug oder aus mehreren zu bearbeitenden Halbzeugen bestehen. Die Anzahl der Halbzeuge in einer Fertigungseinheit ist durch den Fertigungsprozess bestimmt. Die Halbzeuge einer Fertigungseinheit werden gemeinsam durch eine Fertigungslinie transportiert und/oder gemeinsam einer Bearbeitungsmaschine zugeführt. Beispiele für Fertigungseinheiten bei der Herstellung integrierter Schaltkreise sind ein sogenanntes Los oder eine sogenannte Horde, wobei ein Los beispielsweise zwei Horden enthält. Eine Horde enthält beispielsweise zwölf oder fünfundzwanzig Halbleiterwafer.

Bei einer Weiterbildung des erfindungsgemäßen Verfahrens werden die Fertigungsdaten in einer Speichereinheit einer Vorrichtung, z.B. einer Datenverarbeitungsanlage, gespeichert. Die Fertigungsdaten werden beispielsweise manuell in die Datenverarbeitungsanlage eingegeben oder durch ein Produktionssteuerungssystem erzeugt. Auch die qualitativen Prioritätsdaten werden in der Speichereinheit gespeichert, beispielsweise nach einer manuellen Eingabe oder nachdem die qualitativen Prioritätsdaten durch Auswerteprogramme erzeugt worden sind, die vorangegangene Fertigungsprozesse statistisch analysieren.

Bei einer anderen Weiterbildung des erfindungsgemäßen Verfahrens enthalten die Fertigungsdaten Kennzeichen für die Fertigungseinheiten und den Kennzeichen zugeordnete Kennzeichen des für die Fertigungseinheit auszuführenden Bearbeitungsprozesses. Das Kennzeichen ist beispielsweise eine Nummer oder ein Name der Fertigungseinheit.

Bei einer anderen Weiterbildung enthalten die qualitativen Prioritätsdaten Prioritätswerte, die jeweils einer Fertigungsanlage und einem Bearbeitungsprozess zugeordnet sind. Eine besonders einfache Art der Zuordnung ist die Verwendung einer Matrix mit Matrixzeilen und Matrixspalten. Die Prioritätsdaten lassen sich beim Verwenden einer Matrix als Zeilen oder als Spalten in einer Speichereinheit speichern. Hohe Prioritätswerte geben beispielsweise eine hohe Qualität der Bearbeitung an. Jedoch werden alternativ auch Verfahren eingesetzt, bei denen kleine Prioritätswerte eine hohe Priorität angeben. Die zeitlichen Prioritätswerte sind bspw. ganze Zahlen oder reelle Zahlen.

Bei einer nächsten Weiterbildung des Verfahrens zum Vorgeben einer Bearbeitungsreihenfolge wird eine Regel zum automatischen Ermitteln eines Prioritätswertes für eine Fertigungsanlage und für einen Bearbeitungsprozess vorgegeben. Der Prioritätswert wird abhängig von für die Fertigungsanlage und für andere Bearbeitungsprozesse bekannten Prioritätswerten ermittelt, beispielsweise durch eine Mittelwertbildung oder eine Medianermittlung. Mindestens ein beim erfindungsgemäßen Verfahren verwendeter Prioritätswert wird automatisch gemäß der Regel zum automatischen Erzeugen eines Prioritätswertes ermittelt. Damit lassen sich Lücken im Datenbestand auf einfache Art und Weise schließen, insbesondere ohne Einbeziehung von Bedienpersonal, so dass sich das Verfahren zum Vorgeben der Bearbeitungsreihenfolge auch bei einem zunächst unvollständigen Datenbestand ausführen lässt.

Bei einer nächsten Weiterbildung wird beim Erzeugen der Reihenfolgedaten für jeweils eine Fertigungsanlage eine geordnete Liste mit Kennzeichen für die Fertigungseinheiten erzeugt. Die Liste ist beispielsweise eine Zeile oder eine Spalte in einer Matrix. Die geordnete Liste entsteht durch nachträgliches Sortieren oder durch Sortieren bereits beim Erzeugen der Liste und wird deshalb auch als sortierte Liste bezeichnet. Zum Sortieren der Daten werden schnelle Sortierverfahren eingesetzt, beispielsweise das Sortierverfahren "bubble sort" oder "heap sort". Zum Speichern der Kennzeichen lässt sich auch eine sogenannte verkettete Liste nutzen, bei der mit Hilfe von verweisdaten auf das jeweils nächste Datenelement oder auf ein vorhergehendes Datenelement in der geordneten Liste verwiesen wird.

Bei der Weiterbildung sind die Kennzeichen in der Liste nach der Geeignetheit der Fertigungsanlage zum Durchführen des einem Kennzeichen zugeordneten Bearbeitungsprozesses geordnet, vorzugsweise in einer absteigenden Reihenfolge, so dass am Ende der Liste Kennzeichen von Fertigungseinheiten stehen, deren anstehende Bearbeitungsprozesse auf der betreffenden Fertigungsanlage nur mit vergleichsweise geringer Qualität ausgeführt werden können.

Bei einer nächsten Weiterbildung geben die Fertigungsdaten für die Fertigungseinheiten jeweils eine zeitliche Priorität an, die ein Maß für die Priorität der Bearbeitung der Fertigungseinheit ist. Die zeitliche Priorität lässt sich beispielsweise über einen Prioritätswert innerhalb eines vorgegebenen Wertebereiches oder durch die Angabe der Reihenfolge von Fertigungskennzeichen für die Fertigungseinheiten angeben. Die zeitliche Priorität wird beispielsweise durch ein Programm zur Fertigungssteuerung vorgegeben, wobei die zeitliche Priorität beispielsweise proportional zur Verspätung bezüglich eines Sollfertigungszeitpunktes und umgekehrt proportional zu der noch benötigten Fertigungszeit ist.

Die Reihenfolgedaten werden bei der Weiterbildung auch abhängig von der zeitlichen Priorität erzeugt. Durch dies Maßnahme wird erreicht, dass beim Festlegen der Reihenfolge sowohl der vorgegebene Fertigungstermin als auch die Fertigungsqualität berücksichtigt werden. Damit werden sowohl Anforderungen bezüglich der Fertigungstermine als auch Anforderungen bezüglich der Qualität gleichermaßen gut erfüllt. Die zeitlichen Prioritätswerte sind bspw. ganze Zahlen oder reelle Zahlen.

Bei einer Weiterbildung wird eine Zusatzregel zum automatischen Berücksichtigen der zeitlichen Priorität festgelegt. Die Reihenfolgedaten werden unter automatischer Beachtung der Zusatzregel erzeugt. Eine einfache Zusatzregel besteht darin, dass gemäß der Zusatzregel ein Schwellwert für die zeitliche Priorität berücksichtigt wird. Fertigungseinheiten, deren zeitliche Priorität den Schwellwert bei hohen Werten für hohe Prioritäten überschreiten oder bei kleinen Werten für hohe Prioritäten unterschreiten, werden automatisch an den Anfang oder an das Ende der Bearbeitungsreihenfolge gestellt. Jedoch werden auch aufwendigere Verfahren in der Zusatzregel hinterlegt. Ein solches Verfahren wird unten an Hand der Figuren näher erläutert.

Die Fertigungsanlagen sind bei einer Weiterbildung Anlagen zum Abtragen von Material. Zum Abtragen von Material dienen bei der Herstellung von integrierten Schaltkreisen insbesondere Ätzanlagen, z.B. Plasmaätzanlagen. Ein anderer Typ von Fertigungsanlagen, die für die Durchführung des erfindungsgemäßen Verfahrens geeignet sind, sind Anlagen zum Aufbringen von Schichten. Zum Aufbringen von Schichten dienen bei einer Herstellung von integrierten Schaltkreisen beispielsweise Anlagen für chemische Abscheideverfahren aus Gasphase (CVD - Chemical Vapor Deposition) oder für physikalische Abscheideverfahren aus der Gasphase (PVD - Physical Vapor Deposition), z.B. sogenannte Sputterverfahren.

Bei einer anderen Weiterbildung werden die Fertigungseinheiten den Fertigungsanlagen abhängig von der durch die Reihenfolgedaten angegebenen Reihenfolge zugeführt. Alternativ oder zusätzlich wird mit dem Zuführen einer Fertigungseinheit in eine Fertigungsanlage mindestens ein Kennzeichen dieser Fertigungseinheit aus den Reihenfolgedaten entfernt oder als ungültig markiert. Durch diese Maßnahme wird die Übersichtlichkeit der Ausgabe der Bearbeitungsreihenfolge für das Bedienpersonal erhöht.

Die Erfindung betrifft in weiteren Aspekten eine Vorrichtung, die zum Durchführen des erfindungsgemäßen Verfahrens oder einer seiner Weiterbildungen dienen. Damit gelten die oben genannten technischen Wirkungen auch für die Vorrichtung.

Im Folgenden werden Ausführungsbeispiele der Erfindung an Hand der beiliegenden Zeichnungen erläutert. Darin zeigen:
- Figur 1: einen Ausschnitt aus einer Fertigungslinie sowie fünf Lose mit Halbleiterscheiben,
- Figur 2: Datenstrukturen zum Vorgeben einer Bearbeitungsreihenfolge für die Lose,
- Figur 3: Verfahrensschritte eines Verfahrens zum Vorgeben der Bearbeitungsreihenfolge, und
- Figur 4: eine Vorrichtung zum Durchführen des Verfahrens.

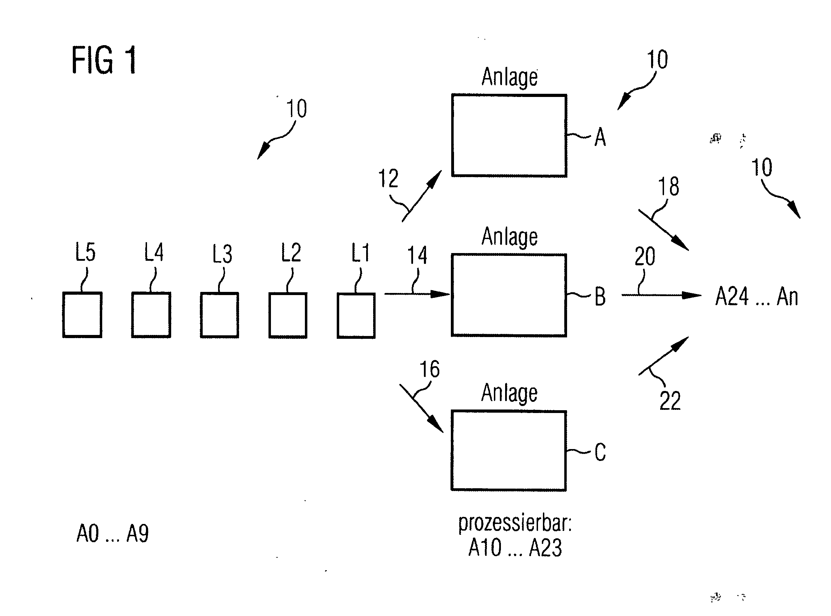

Figur 1 zeigt einen Ausschnitt aus einer Fertigungslinie 10 zur Fertigung von integrierten Schaltkreisen sowie fünf Lose L1 bis L5 mit jeweils 25 Halbleiterwafern. Der in Figur 1 gezeigte Ausschnitt der Fertigungslinie 10 enthält drei Plasmaätzanlagen A, B und C, die zum Durchführen von Einzelprozess-Anweisungen A10 bis A23 geeignet sind. Beispielsweise betrifft eine Anweisung A10 ein Sauerstoff-Plasmatrockenätzen nach einer Aluminiumabscheidung, eine Anweisung A14 ein Sauerstoff-Plasmatrockenätzen nach dem Entfernen einer ersten Fotoresistschicht und eine Anweisung A23 ein Sauerstoff-Plasmatrockenätzen nach dem Entfernen einer zweiten Fotoresistschicht.

Den Plasmaätzanlagen A bis C vorgelagert sind weitere Anlagen zum Durchführen von Anweisungen A0 bis A9. Den Plasmaätzanlagen A bis C nachgelagert sind weitere Anlagen zum Durchführen von Anweisungen A24 bis An, wobei n eine natürliche Zahl zur Bezeichnung der letzten prozessierbaren Anweisung ist. Grundsätzlich durchlaufen die Lose L1 bis L5 die Fertigungslinie 10 in einer Richtung, wobei jedoch Rücktransporte erforderlich sind, wenn ein Los L1 bis L5 nachbearbeitet werden soll, oder wenn eine Anlage mehrfach genutzt werden soll für die Herstellung der Halbleiterscheiben eines Loses L1 bis L5.

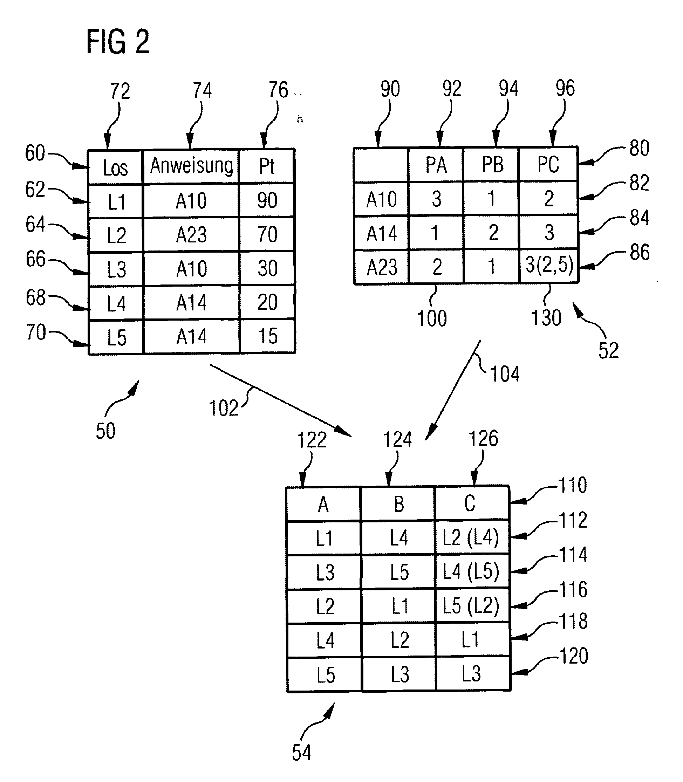

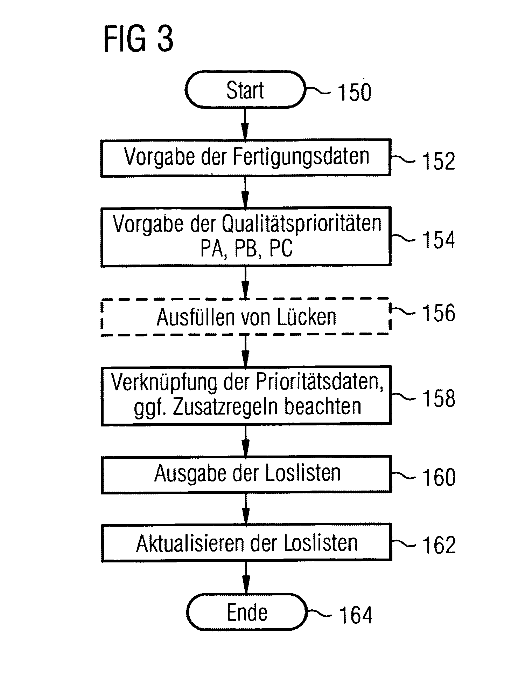

Jede Plasmaätzanlagen A, B und C ist grundsätzlich zur Durchführung jeder Anweisung A10 bis A23 geeignet. Beim Verteilen der Lose L1 bis L5 auf die Plasmaätzanlagen A, B und C, siehe Pfeile 12 bis 16, wird jedoch auch die Qualität berücksichtigt, mit der die Plasmaätzanlagen A, B und C die Anweisungen A10 bis A23, insbesondere die Anweisungen A10, A14 und A23, ausführen. Die dabei verwendeten Datenstrukturen werden unten an Hand der Figur 2 näher erläutert. Die dabei ausführten Verfahrensschritte werden unten an Hand der Figur 3 näher erläutert.

Nach der Bearbeitung der Lose L1 bis L5 mit Hilfe der Plasmaätzanlagen A bis C werden die Lose L1 bis L5 in der Fertigungslinie 10 weiter bearbeitet, siehe Pfeile 18 bis 22, wobei dann Anweisungen A24 bis An ausgeführt werden.

Figur 2 zeigt Datenstrukturen zum Vorgeben einer Bearbeitungsreihenfolge für die Lose L1 bis L5, nämlich eine Fertigungsdatentabelle 50, eine Qualitätsdatentabelle 52 und eine Reihenfolgedatentabelle 54. Die Daten in den Tabellen 50 bis 54 lassen sich beispielsweise in Datenbanken speichern. Auch eine Aufteilung dieser Daten auf einzelne Datensätze kommt in Betracht, beispielsweise bilden dann die Zeilen einer Tabelle jeweils einen Datensatz.

Die Fertigungsdatentabelle 50 enthält einen Tabellenkopf 60, fünf Tabellenzeilen 62 bis 70 sowie drei Tabellenspalten 72, 74 und 76. In dem Tabellenkopf 60 sind drei Datenfelder enthalten, die für jede Tabellenspalte 72 bis 76 die Art der darin angegebenen Daten bezeichnen. In der Tabellenspalte 72 werden Losekennzeichen für die Lose L1 bis L5 angegeben. In der mittleren Tabellenspalte 74 werden Einzelprozess-Anweisungen angegeben, die den Prozess bezeichnen, der als nächstes für die in der gleichen Zeile bezeichnete Fertigungseinheit auszuführen ist. Die Tabellenspalte 76 gibt Prioritätswerte für zeitliche Prioritäten Pt an, mit denen die in der gleichen Zeile wie der Prioritätswert bezeichneten Lose L1 bis L5 bearbeitet werden müssen. Hohe Prioritätswerte entsprechen einer hohen Priorität.

Beispielsweise ist der ersten Tabellenzeile 62 zu entnehmen, dass das Los L1 das Kennzeichen "L1" hat. Für dieses Los L1 muss als nächstes die Anweisung A10 ausgeführt werden. Die Durchführung der Anweisung A10 hat eine hohe Priorität, die durch den Prioritätswert 90 angegeben wird.

Die Qualitätsdatentabelle 52 enthält einen Tabellenkopf 80, drei Tabellenzeilen 82, 84 und 86 und vier Tabellenspalten 90, 92, 94 und 96. Die Tabellenspalte 90 dient der Angabe der Anweisungen A10, A14 und A23. Die Tabellenspalte 92 enthält Qualitätsprioritäten PA für die Plasmaätzanlage A. Die Tabellenspalte 94 enthält Qualitätsprioritätswerte PB für die Plasmaätzanlage B. Die rechte Tabellenspalte 96 enthält schließlich Qualitätsprioritäten PC für die Plasmaätzanlage C. Die Qualitätsdatentabelle 52 ist als Matrix zu lesen und gibt Prioritätswerte an. Ein Matrixelement 100 in der Tabellenspalte 92 für die Qualitätspriorität PA der Plasmaätzanlage A und in der Tabellenzeile 86 für die Anweisung A23 enthält den Wert Zwei. Damit hat die Plasmaätzanlage A bei der Durchführung des Prozesses A23 eine mittlere Qualität. Der Wert Eins eines Prioritätswertese gibt eine geringe Qualität an. Der Wert Drei eines Prioritätswertes gibt dagegen eine hohe Qualität an.

Aus den in der Fertigungsdatentabelle 50 und der Qualitätsdatentabelle 52 enthaltenen Daten wird automatisch die Reihenfolgedatentabelle 54 erzeugt, siehe Pfeile 102 und 104. Die Reihenfolgedatentabelle 54 enthält einen Tabellenkopf 110, Tabellenzeilen 112 bis 120 sowie Tabellenspalten 122, 124 und 126. Die Tabellenspalte 122 betrifft die Plasmaätzanlage A. Die Tabellenspalte 124 betrifft die Plasmaätzanlage B. Schließlich betrifft die Tabellenspalte 126 die Plasmaätzanlage C. In den Tabellenzeilen 112 bis 120 wird für jede Plasmaätzanlage A, B, C eine Bearbeitungsreihenfolge für die Lose L1 bis L5 angegeben. Weiter oben stehende Tabellenzeilen 112 bis 120 enthalten Kennzeichen von früher zu bearbeitenden Losen L1 bis L5 als weiter unten stehende Tabellenzeilen. Beispielsweise ist der Tabellenspalte 122 zu entnehmen, dass die bevorzugte Bearbeitungsreihenfolge für die Plasmaätzanlage A nur etwas von der in der Fertigungsdatentabelle 50 angegebenen Reihenfolge abweicht, nämlich L1, L3, L2, L4 und L5. Dagegen weicht die Reihenfolge für die Plasmaätzanlage B von dieser Reihenfolge stärker ab und lautet: L4, L5, L1, L2 und L3.

Den Folgen in den Tabellenspalten 122, 124 und 126 der Reihenfolgedatentabelle 54 ist gemeinsam, dass die Kennzeichen für die Lose L1 bis L5 jeweils abhängig von der Geeignetheit der jeweiligen Plasmaätzanlage A, B und C für die Durchführung des für das betreffende Los L1 bis L5 als nächstes auszuführenden Prozessschritte gemäß einer Anweisung A10, A14 bzw. A23 geordnet sind. Beispielsweise gilt für die in der Tabellenspalte 122 enthaltene Folge L1, A10, Drei; L3, A10, Drei; L2, A23, Zwei; L4, A14, Eins; und L5, A14, Eins. Die in den genannten Zahlentripeln jeweils als letztes angegebenen Prioritätswerte aus der Qualitätsdatentabelle 52 bilden somit eine absteigende Folge.

Estwird bei einem anderen Ausführungsbeispiel angenommen, dass ein Analyseprogramm keine Qualitätspriorität PC für die Plasmaätzanlage C und für die Anweisung A23 ermitteln konnte. Um dennoch das eben erläuterte Verfahren durchführen zu können, wird aus den Qualitätsprioritäten PC für die Plasmaätzanlage C und für die Anweisungen A10 und A14 der Mittelwert ermittelt. Im Ausführungsbeispiel ist dies der Mittelwert aus den Werten Zwei und Drei, d.h. der Wert 2,5, siehe die Klammerangabe im Matrixelement 130. Aufgrund dieser näherungsweisen Berechnung der Qualitätspriorität wird in der Tabellenspalte 126 abweichend von der Bearbeitungsreihenfolge L2, L4, L5, L1 und L3 eine Bearbeitungsreihenfolge L4, L5, L2, L1 und L3 ermittelt.

Figur 3 zeigt Verfahrensschritte zum Vorgeben der Bearbeitungsreihenfolge für die Bearbeitung der Lose L1 bis L5. Das Verfahren beginnt in einem Verfahrensschritt 150. In einem folgenden Verfahrensschritt 152 wird die Fertigungsdatentabelle 50 vorgegeben, beispielsweise durch ein Programm zur Prozesssteuerung.

In einem Verfahrensschritt 154 wird die Qualitätsdatentabelle 52 vorgegeben, beispielsweise durch ein Analyseprogramm, das die auf den Plasmaätzanlagen A, B und C in der Vergangenheit durchgeführten Prozesse miteinander vergleicht. Die Werte für die Prioritätsqualitäten PA, PB und PC in der Qualitätsdatentabelle 52 werden beispielsweise durch einen Vergleich der Ausbeute, durch einen Vergleich der Defektdichte oder durch eine Kombination aus diesen beiden Vergleichen erzeugt. Beispielsweise wird dieser Vergleich regelmäßig durchgeführt, z.B. ein Mal pro Woche oder jede zweite Woche. Außerdem werden die Werte in einer Datenbank abgespeichert. Bei einem anderen Ausführungsbeispiel besteht auch die Möglichkeit, die Werte in der Datenbank manuell zu verändern, um auch zwischen dem regelmäßigen Aktualisieren liegende Abweichungen der Fertigung berücksichtigen zu können.

In einem optional auszuführenden Verfahrensschritt 156 werden Lücken in der Qualitätsdatentabelle 52 beispielsweise durch die oben erläuterte Mittelwertberechnung ausgefüllt.

In einem Verfahrensschritt 158 werden die Daten der Fertigungsdatentabelle 50 und der Qualitätsdatentabelle 52 verknüpft, so wie oben an Hand der Figur 2 erläutert. Beispielsweise werden zunächst ausgehend von den Zeilen 62 bis 70 der Fertigungsdatentabelle 50 den einzelnen Zeilen 62 bis 70 die Qualitätsprioritätswerte für die Qualitätspriorität PA abhängig von der in der jeweiligen Zeile 62 bis 70 angegebenen Anweisung A10 bis A23 zugeordnet. Danach werden die so erzeugten Datensätze nach den Werten der Qualitätsprioritäten PA sortiert ohne die Daten eines Datensatzes zu verändern. Anschließend wird aus der sortierten Tabelle die Spalte 72 mit dem Loskennzeichen gelesen und in die Spalte 122 ohne Veränderung der Reihenfolge eingetragen. Danach wird dieser Vorgang für die Werte der Qualitätsprioritäten PB bzw. PC wiederholt.

Optional wird eine Zusatzregel zum Berücksichtigen der zeitlichen Prioritäten Pt ausgewertet. Wird die zeitliche Priorität Pt berücksichtigt, so wird bei einer Änderung der Reihenfolge der Bearbeitung zweier Fertigungseinheiten bspw. zunächst der Absolutbetrag der Differenzen der zu den Fertigungseinheiten gehörenden zeitlichen Prioritäten Pt bestimmt, beispielsweise für die Fertigungseinheiten L1 und L2 der Wert Zwanzig, weil gilt: 90 - 70 = 20. Der so berechnete Wert wird dividiert durch das Minimum der Differenz aus dem Höchstwert für die Priorität Pt und der Priorität Pt für das eine Los L1 und der Differenz aus dem Höchstwert der Priorität Pt und dem Prioritätswert 70 für das andere Los L2. Im Ausführungsbeispiel ergibt sich 100 - 90 = 10 und 100 - 70 = 30, wobei das Minimum 10 ist. Demzufolge ist der Wert Zwanzig durch Zehn zu dividieren, wobei das Ergebnis Zwei entsteht. Der Wert des Ergebnisses ist nicht kleiner als ein vorgegebener Schwellwert, der bspw. den Wert Eins hat, so dass bspw. das in der Tabellenspalte 126 angegebene Überholen des Loses L1 durch das Los L2 nicht zugelassen wird.

In einem Verfahrensschritt 160 werden die in den Tabellenspalten 122, 124 und 126 enthaltenen Loslisten ausgegeben, beispielsweise ausgedruckt oder auf einem Bildschirm angezeigt.

In einem Verfahrensschritt 162 werden die Loslisten aktualisiert. Beispielsweise sei angenommen, dass die Plasmaätzanlage B zuerst frei wird. Deshalb wird gemäß des oberen Eintrages in der Tabellenspalte 124 für die Plasmaätzanlage B das Los L4 der Plasmaätzanlage B zugeführt. Die Verweise auf das Los L4 in der Reihenfolgedatentabelle 24 werden gestrichen. Es sei angenommen, dass danach die Plasmaätzanlage A frei wird. Deshalb wird dann gemäß des oberen Eintrages in der Tabellenspalte 122 das Los L1 der Plasmaätzanlage A zugeführt. Die Verweise auf das Los L1 werden in der Reihenfolge der Datentabelle 54 gestrichen. Nach diesem Verfahren werden alle Fertigungseinheiten L1 bis L5 auf die Plasmaätzanlagen A bis C verteilt.

Das Verfahren wird in einem Verfahrensschritt 154 beendet, nachdem alle Lose L1 bis L5 auf den Plasmaätzanlagen A, B bzw. C bearbeitet worden sind. Die Reihenfolgedatentabelle 54 enthält dann keine Einträge mehr.

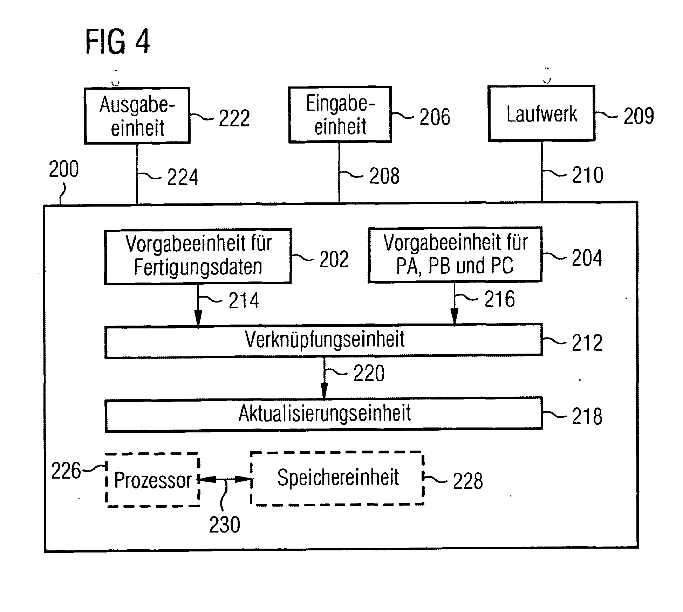

Figur 4 zeigt eine Vorrichtung 200 zur Durchführung des an Hand der Figur 3 erläuterten Verfahrens. Die Vorrichtung 200 enthält eine Vorgabeeinheit 202 für Fertigungsdaten. Eine Vorgabeeinheit 204 dient der Vorgabe der Qualitätsprioritäten PA, PB und PC. Die Vorgabeeinheiten 202 und 204 sind beispielsweise mit einer Eingabeeinheit 206 gekoppelt, die an die Vorrichtung 200 über eine Leitung 208 angeschlossen ist. Die Eingabeeinheit 206 ist beispielsweise eine Tastatur. Alternativ lässt sich jedoch auch ein Datenübertragungsnetz oder ein Diskettenlaufwerk 209 zur Eingabe der Daten nutzen. Das Diskettenlaufwerk 209 ist über eine Anschlussleitung 210 mit der Vorrichtung 200 verbunden.

Die Vorgabeeinheiten 202 und 204 geben die in der Fertigungsdatentabelle 50 bzw. in der Qualitätsdatentabelle 52 enthaltenen Werte an eine Verknüpfungseinheit 212 aus, siehe Pfeile 214, 216. Die Verknüpfungseinheit 212 erzeugt die Werte der Reihenfolgedatentabelle 54 und gibt sie an eine Aktualisierungseinheit 218 aus, siehe Pfeil 220. Die Aktualisierungseinheit 218 führt die oben an Hand des Verfahrensschrittes 162 erläuterten Vorgänge aus. Die Ausgabe der Verknüpfungseinheit 212 wird außerdem auf einer Ausgabeeinheit 222 ausgegeben, die beispielsweise ein Bildschirm ist. Die Ausgabeeinheit 222 ist mit der Vorrichtung 200 über eine Leitung 224 verbunden.

Bei einem ersten Ausführungsbeispiel enthält die Vorrichtung 200 keinen Prozessor sondern nur eine elektronische Logikschaltung, die die oben an Hand der Figur 34 erläuterten Verfahrensschritte ausführt. Bei einem anderen Ausführungsbeispiel enthält die Vorrichtung 200 dagegen einen Prozessor 226 und eine Speichereinheit 228, in der vom Prozessor 226 auszuführende Programmbefehle eines Programms gespeichert sind. Der Zugriff des Prozessors 226 auf die Speichereinheit 228 wird durch einen Pfeil 230 dargestellt. Die Funktionen der Vorgabeeinheiten 202, 204, der Verknüpfungseinheit 212 und der Aktualisierungseinheit 220 werden beim Ausführen der in der Speichereinheit 228 gespeicherten Programmbefehle durch den Prozessor 226 erbracht.

Bei einem anderen Ausführungsbeispiel wird die Tabelle 50 laufend mit Einträgen für neue nachrückende Lose gefüllt, sobald für eine Fertigungseinheit, d.h. ein Los, der vorhergehende Bearbeitungsschritt beendet worden ist. Bei einer Aktualisierung wird die Tabelle 50 erneut mit der Tabelle 52 verknüpft. Alternativ wird nicht jedes Mal die gesamte Tabelle 54 neue errechnet, sondern immer wenn eine Anlage A bis C mit der Bearbeitung eines Loses fertig ist, "meldet" sich die Anlage beim Steuerprogramm. Das Steuerprogramm veranlasst, dass nur die Spalte für die betreffende Anlage, z.B. die Spalte 94 für die Anlage B, mit der Tabelle 50, verknüpft wird.

Bei einem anderen Ausführungsbeispiel gibt es eine Auftragsklasse, z.B. A11, die nicht auf allen Anlagen der betrachteten Gruppe ausführbar ist, z.B. nur auf den Anlagen A und B. In diesem Fall werden bei schlechten Qualitätswerten für die Ausführung des Prozesses A11 die Qualitätswerte bei hohen Werten für hohe Qualität gleichermaßen erhöht bzw. bei kleinen Werten für hohe Qualitäten gleichermaßen verringert, um Aufträge der betreffenden Auftragsklasse nicht zu stark zu benachteiligen. Gelten für den Prozess A11 bspw. PA gleich Zwei und PB gleich Eins, so wird jeweils der Wert Eins addiert.

## Patentansprüche (Patentansprüche für folgende(n) Vertragsstaat(en): DE)

1. Verfahren zum Vorgeben einer Bearbeitungsreihenfolge (54), , mit den mit Hilfe einer Vorrichtung ausgeführten Schritten:
Vorgeben von Fertigungsdaten (50), die für mehrere zu bearbeitende Fertigungseinheiten (L1 bis L5) jeweils einen von mindestens zwei verschiedenen Bearbeitungsprozessen (A10, A14) angeben (152),
Vorgeben von qualitativen Prioritätsdaten (52), die angeben,in welchem Maß mehrere alternativ für die Durchführung der. Bearbeitungsprozesse (A10, A14) nutzbare Fertigungsanlagen (A bis C) zur Durchführung eines Bearbeitungsprozesses (A10, A14) geeignet sind (154),
automatisches Erzeugen von Reihenfolgedaten (54) abhängig von den Fertigungsdaten (50) und den qualitativen Prioritätsdaten (52), wobei die Reihenfolgedaten (54) fertigungsanlagenbezogen eine Bearbeitungsreihenfolge für die Bearbeitung der Fertigungseinheiten (L1 bis L5) angeben,
Speichern und/oder Ausgeben der Reihenfolgedaten (54; 158), wobei die qualitativen Prioritätsdaten (52) durch einen Vergleich der Ausbeute, durch einen Vergleich der Defektdichte oder durch eine Kombination aus diesen beiden Vergleichen erzeugt werden.

2. Verfahren nach Anspruch 1, **gekennzeichnet durch** die Schritte:
Speichern der Fertigungsdaten (50) in einer Speichereinheit (228) der Vorrichtung (200),
und Speichern der qualitativen Prioritätsdaten (52) in einer Speichereinheit (228) der Vorrichtung (200).

3. Verfahren nach Anspruch 1 oder 2, **dadurch gekennzeichnet, dass** die Fertigungsdaten Kennzeichen (72) für die Fertigungseinheiten (L1 bis L5) und den Kennzeichen (72) zugeordnete Kennzeichen (74) für den Bearbeitungsprozess (A10, A14) enthalten.

4. Verfahren nach einem der vorhergehenden Ansprüche, **dadurch gekennzeichnet, dass** die qualitativen Prioritätsdaten (52) Prioritätswerte enthalten, die jeweils einer Fertigungsanlage (A bis C) und einem Bearbeitungsprozess (A10, A14) zugeordnet sind, vorzugsweise in Form einer Matrix, in Form von Zeilen einer Matrix oder in Form von Spalten einer Matrix.

5. Verfahren nach Anspruch 4, **dadurch gekennzeichnet, dass** eine Regel zum automatischen Ermitteln eines Prioritätswertes für eine Fertigungsanlage (A bis C) und für einen Bearbeitungsprozess (A10, A14) aus für die Fertigungsanlage (A bis C) bekannten Prioritätswerten für andere Bearbeitungsprozesse (A23) vorgegeben wird,
und dass mindestens ein Prioritätswert automatisch gemäß der Regel zum automatischen Ermitteln eines Prioritätswertes ermittelt wird (156).

6. Verfahren nach einem der vorhergehenden Ansprüche, **dadurch gekennzeichnet, dass** beim Erzeugen der Reihenfolgedaten (54) für eine Fertigungsanlage (A bis C) eine geordnete Liste mit Kennzeichen für die Fertigungseinheiten (L1 bis L5) erzeugt wird,
wobei die Kennzeichen (122) in der Liste nach der Geeignetheit der Fertigungsanlage (A) zum Durchführen des einem Kennzeichen (122) gemäß den Fertigungsdaten (50) zugeordneten Bearbeitungsprozesses (A10, A14) geordnet sind, vorzugsweise in absteigender Reihenfolge.

7. Verfahren nach einem der vorhergehenden Ansprüche, **dadurch gekennzeichnet, dass** die Fertigungsdaten (50) für die Fertigungseinheiten (L1 bis L5) jeweils eine zeitliche Priorität (Pt) angeben, die ein Maß für die Dringlichkeit der Bearbeitung der Fertigungseinheit (L1 bis L5) ist,
und dass die Reihenfolgedaten (54) auch abhängig von der zeitlichen Priorität (Pt) erzeugt werden.

8. Verfahren nach Anspruch 7, **dadurch gekennzeichnet, dass** eine Zusatzregel zum automatischen Berücksichtigen der zeitlichen Priorität (Pt) festgelegt wird, und dass die Reihenfolgedaten (54) unter automatischer Beachtung der Zusatzregel erzeugt werden (158).

9. Verfahren nach Anspruch 8, **dadurch gekennzeichnet, dass** gemäß der Zusatzregel ein Schwellwert für die zeitliche Priorität (Pt) berücksichtigt wird,
und dass eine Fertigungseinheit (L1 bis L5), deren zeitliche Priorität (Pt) den Schwellwert bei großen Werten für hohe zeitliche Prioritäten überschreitet oder bei kleinen Werten für hohe zeitliche Prioritäten unterschreitet automatisch an den Anfang oder an das Ende der Bearbeitungsreihenfolge gestellt wird,
oder dass gemäß der Zusatzregel die zeitlichen Prioritätswerte zweier Fertigungseinheiten (L1, L2) ermittelt werden,
dass abhängig von den beiden Prioritätswerten ein Maß für die Abweichung der Prioritätswerte ermittelt wird,
dass ein Schwellwert für die Erzeugung der Prioritätswerte berücksichtigt wird,
und dass eine Veränderung der durch die zeitlichen Prioritätswerte vorgegebenen Bearbeitungsreihenfolge nur dann zugelassen wird, wenn die ermittelte Abweichung bei großen Werten für hohe zeitliche Prioritäten kleiner oder bei kleinen Werten für hohe zeitliche Prioritäten größer als der Schwellwert ist.

10. Verfahren nach einem der vorhergehenden Ansprüche, **dadurch gekennzeichnet, dass** die Fertigungseinheiten (L1 bis L5) Halbzeuge für die Herstellung von integrierten Schaltkreisen sind, insbesondere Halbleiterscheiben, und/oder dass die Fertigungsanlagen (A bis C) Anlagen zum Abtragen von Material sind, vorzugsweise Ätzanlagen,
und/oder dass die Fertigungsanlagen (A bis C) Anlagen zum Aufbringen von Schichten sind, vorzugsweise mit Hilfe eines chemischen Abscheideverfahrens aus der Gasphase oder mit Hilfe eines physikalischen Abscheideverfahrens aus der Gasphase, und/oder dass die Fertigungsanlagen (A bis C) Anlagen zur Ionenimplantation sind,
und/oder dass die Fertigungsanlagen (A bis C) Anlagen zum Bestrahlen von Resistschichten, insbesondere zum Belichten sind,
und/oder dass die Fertigungsanlagen (A bis C) Anlagen zum Reinigen von Halbleiterscheiben sind.

11. Verfahren nach einem der vorhergehenden Ansprüche, **dadurch gekennzeichnet , dass** die Fertigungseinheiten (L1 bis L5) den Fertigungsanlagen (A bis C) abhängig von den Reihenfolgedaten (54) zugeführt werden,
und/oder dass mit dem Zuführen einer Fertigungseinheit (L1 bis L5) in eine Fertigungsanlage (A bis C) mindestens ein Kennzeichendatum einer Fertigungseinheit (L1 bis L5) aus den Reihenfolgedaten (54) entfernt oder als ungültig markiert wird.

12. Vorrichtung (200), insbesondere Datenverarbeitungsanlage, zum Vorgeben einer Bearbeitungsreihenfolge, zum Durchführen des Verfahrens nach einem der Ansprüche 1 bis 11, mit einer Fertigungsdatenvorgabeeinheit (202), die Fertigungsdaten (50) vorgibt, wobei die Fertigungsdaten (50) für mehrere zu bearbeitende Fertigungseinheiten (L1 bis L5) jeweils einen von mindestens zwei verschiedenen Bearbeitungsprozessen (A10, A14) angeben,
mit einer Prioritätsdatenvorgabeeinheit (204), die qualitative Prioritätsdaten (52) vorgibt, wobei die qualitativen Prioritätsdaten (52) angeben, in welchem Maß mehrere alternativ für die Durchführung der Bearbeitungsprozesse (A10, A14) nutzbare Fertigungsanlagen (A bis C) zur Durchführung eines Bearbeitungsprozesses (A10, A14) geeignet sind,
und mit einer Bearbeitungseinheit (212, 218), die abhängig von den Fertigungsdaten (50) und den qualitativen Prioritätsdaten (52) Reihenfolgedaten (54) erzeugt, wobei die Reihenfolgedaten (54) eine fertigungsanlagenbezogene Bearbeitungsreihenfolge für die Bearbeitung der Fertigungseinheiten (L1 bis L5) angeben.

## Patentansprüche (Patentansprüche für folgende(n) Vertragsstaat(en): FR, IT)

1. Verfahren zum Vorgeben einer Bearbeitungsreihenfolge (54), mit den mit Hilfe einer Vorrichtung ausgeführten Schritten:
Vorgeben von Fertigungsdaten (50), die für mehrere zu bearbeitende Fertigungseinheiten (L1 bis L5) jeweils einen von mindestens zwei verschiedenen Bearbeitungsprozessen (A10, A14) angeben (152),
Vorgeben von qualitativen Prioritätsdaten (52), die angeben, in welchem Maß mehrere alternativ für die Durchführung der Bearbeitungsprozesse (A10, A14) nutzbare Fertigungsanlagen (A bis C) zur Durchführung eines Bearbeitungsprozesses (A10, A14) geeignet sind (154),
automatisches Erzeugen von Reihenfolgedaten (54) abhängig von den Fertigungsdaten (50) und den qualitativen Prioritätsdaten (52), wobei die Reihenfolgedaten (54) fertigungsanlagenbezogen eine Bearbeitungsreihenfolge für die Bearbeitung der Fertigungseinheiten (L1 bis L5) angeben,
Speichern und/oder Ausgeben der Reihenfolgedaten (54; 158), wobei die qualitativen Prioritätsdaten (52) die Fertigungsqualität berücksichtigen.

2. Verfahren nach Anspruch 1, **gekennzeichnet durch** die Schritte:
Speichern der Fertigungsdaten (50) in einer Speichereinheit (228) der Vorrichtung (200),
und Speichern der qualitativen Prioritätsdaten (52) in einer Speichereinheit (228) der Vorrichtung (200).

3. Verfahren nach Anspruch 1 oder 2, **dadurch gekennzeichnet, dass** die Fertigungsdaten Kennzeichen (72) für die Fertigungseinheiten (L1 bis L5) und den Kennzeichen (72) zugeordnete Kennzeichen (74) für den Bearbeitungsprozess (A10, A14) enthalten.

4. Verfahren nach einem der vorhergehenden Ansprüche, **dadurch gekennzeichnet, dass** die qualitativen Prioritätsdaten (52) Prioritätswerte enthalten, die jeweils einer Fertigungsanlage (A bis C) und einem Bearbeitungsprozess (A10, A14) zugeordnet sind, vorzugsweise in Form einer Matrix, in Form von Zeilen einer Matrix oder in Form von Spalten einer Matrix.

5. Verfahren nach Anspruch 4, **dadurch gekennzeichnet, dass** eine Regel zum automatischen Ermitteln eines Prioritätswertes für eine Fertigungsanlage (A bis C) und für einen Bearbeitungsprozess (A10, A14) aus für die Fertigungsanlage (A bis C) bekannten Prioritätswerten für andere Bearbeitungsprozesse (A23) vorgegeben wird, und dass mindestens ein Prioritätswert automatisch gemäß der Regel zum automatischen Ermitteln eines Prioritätswertes ermittelt wird (156).

6. Verfahren nach einem der vorhergehenden Ansprüche, **dadurch gekennzeichnet, dass** beim Erzeugen der Reihenfolgedaten (54) für eine Fertigungsanlage (A bis C) eine geordnete Liste mit Kennzeichen für die Fertigungseinheiten (L1 bis L5) erzeugt wird,
wobei die Kennzeichen (122) in der Liste nach der Geeignetheit der Fertigungsanlage (A) zum Durchführen des einem Kennzeichen (122) gemäß den Fertigungsdaten (50) zugeordneten Bearbeitungsprozesses (A10, A14) geordnet sind, vorzugsweise in absteigender Reihenfolge.

7. Verfahren nach einem der vorhergehenden Ansprüche, **dadurch gekennzeichnet, dass** die Fertigungsdaten (50) für die Fertigungseinheiten (L1 bis L5) jeweils eine zeitliche Priorität (Pt) angeben, die ein Maß für die Dringlichkeit der Bearbeitung der Fertigungseinheit (L1 bis L5) ist,
und dass die Reihenfolgedaten (54) auch abhängig von der zeitlichen Priorität (Pt) erzeugt werden.

8. Verfahren nach Anspruch 7, **dadurch gekennzeichnet, dass** eine Zusatzregel zum automatischen Berücksichtigen der zeitlichen Priorität (Pt) festgelegt wird, und dass die Reihenfolgedaten (54) unter automatischer Beachtung der Zusatzregel erzeugt werden (158).

9. Verfahren nach Anspruch 8, **dadurch gekennzeichnet, dass** gemäß der Zusatzregel ein Schwellwert für die zeitliche Priorität (Pt) berücksichtigt wird,
und dass eine Fertigungseinheit (L1 bis L5), deren zeitliche Priorität (Pt) den Schwellwert bei großen Werten für hohe zeitliche Prioritäten überschreitet oder bei kleinen Werten für hohe zeitliche Prioritäten unterschreitet automatisch an den Anfang oder an das Ende der Bearbeitungsreihenfolge gestellt wird,
oder dass gemäß der Zusatzregel die zeitlichen Prioritätswerte zweier Fertigungseinheiten (L1, L2) ermittelt werden,
dass abhängig von den beiden Prioritätswerten ein Maß für die Abweichung der Prioritätswerte ermittelt wird,
dass ein Schwellwert für die Erzeugung der Prioritätswerte berücksichtigt wird,
und dass eine Veränderung der durch die zeitlichen Prioritätswerte vorgegebenen Bearbeitungsreihenfolge nur dann zugelassen wird, wenn die ermittelte Abweichung bei großen Werten für hohe zeitliche Prioritäten kleiner oder bei kleinen Werten für hohe zeitliche Prioritäten größer als der Schwellwert ist.

10. Verfahren nach einem der vorhergehenden Ansprüche, **dadurch gekennzeichnet, dass** die Fertigungseinheiten (L1 bis L5) Halbzeuge für die Herstellung von integrierten Schaltkreisen sind, insbesondere Halbleiterscheiben, und/oder dass die Fertigungsanlagen (A bis C) Anlagen zum Abtragen von Material sind, vorzugsweise Ätzanlagen,
und/oder dass die Fertigungsanlagen (A bis C) Anlagen zum Aufbringen von Schichten sind, vorzugsweise mit Hilfe eines chemischen Abscheideverfahrens aus der Gasphase oder mit Hilfe eines physikalischen Abscheideverfahrens aus der Gasphase, und/oder dass die Fertigungsanlagen (A bis C) Anlagen zur Ionenimplantation sind,
und/oder dass die Fertigungsanlagen (A bis C) Anlagen zum Bestrahlen von Resistschichten, insbesondere zum Belichten sind,
und/oder dass die Fertigungsanlagen (A bis C) Anlagen zum Reinigen von Halbleiterscheiben sind.

11. Verfahren nach einem der vorhergehenden Ansprüche, **dadurch gekennzeichnet, dass** die Fertigungseinheiten (L1 bis L5) den Fertigungsanlagen (A bis C) abhängig von den Reihenfolgedaten (54) zugeführt werden,
und/oder dass mit dem Zuführen einer Fertigungseinheit (L1 bis L5) in eine Fertigungsanlage (A bis C) mindestens ein Kennzeichendatum einer Fertigungseinheit (L1 bis L5) aus den Reihenfolgedaten (54) entfernt oder als ungültig markiert wird.

12. Vorrichtung (200), insbesondere Datenverarbeitungsanlage, zum Vorgeben einer Bearbeitungsreihenfolge, zum Durchführen des Verfahrens nach einem der Ansprüche 1 bis 11, mit einer Fertigungsdatenvorgabeeinheit (202), die Fertigungsdaten (50) vorgibt, wobei die Fertigungsdaten (50) für mehrere zu bearbeitende Fertigungseinheiten (L1 bis L5) jeweils einen von mindestens zwei verschiedenen Bearbeitungsprozessen (A10, A14) angeben,
mit einer Prioritätsdatenvorgabeeinheit (204), die qualitative Prioritätsdaten (52) vorgibt, wobei die qualitativen Prioritätsdaten (52) angeben, in welchem Maß mehrere alternativ für die Durchführung der Bearbeitungsprozesse (A10, A14) nutzbare Fertigungsanlagen (A bis C) zur Durchführung eines Bearbeitungsprozesses (A10, A14) geeignet sind,
und mit einer Bearbeitungseinheit (212, 218), die abhängig von den Fertigungsdaten (50) und den qualitativen Prioritätsdaten (52) Reihenfolgedaten (54) erzeugt, wobei die Reihenfolgedaten (54) eine fertigungsanlagenbezogene Bearbeitungsreihenfolge für die Bearbeitung der Fertigungseinheiten (L1 bis L5) angeben.

## Claims (Claims for the following Contracting State(s): DE)

1. Method for presetting a machining sequence (54), comprising the following steps, performed with the aid of an apparatus:
presetting production data (50), which indicate for a number of production units (L1 to L5) to be machined in each case one of at least two different machining processes (A10, A14) (152),
presetting qualitative priority data (52), which indicate to what extent a number of production installations (A to C) that can be alternatively used for carrying out the machining processes (A10, A14) are suitable for carrying out a machining process (A10, A14) (154),
automatically generating sequence data (54) in dependence on the production data (50) and the qualitative priority data (52), the sequence data (54) indicating specifically with respect to the production installations a machining sequence for the machining of the production units (L1 to L5), storing and/or outputting the sequence data (54; 158), the qualitative priority data (52) being generated by a comparison of the yield, by a comparison of the defect density or by a combination of these two comparisons.

2. Method according to Claim 1, **characterized by** the following steps:
storing the production data (50) in a memory unit (228) of the apparatus (200),
and storing the qualitative priority data (52) in a memory unit (228) of the apparatus (200).

3. Method according to Claim 1 or 2, **characterized in that** the production data contain identifiers (72) for the production units (L1 to L5) and identifiers (72), assigned to the identifiers (72), for the machining process (A10, A14).

4. Method according to one of the preceding claims, **characterized in that** the qualitative priority data (52) contain priority values, which are respectively assigned to production installations (A to C) and a machining process (A10, A14), preferably in the form of a matrix, in the form of rows of a matrix or in the form of columns of a matrix.

5. Method according to Claim 4, **characterized in that** a rule for automatically determining a priority value for a production installation (A to C) and for a machining process (A10, A14) from priority values known for the production installation (A to C) is preset for other machining processes (A23), and **in that** at least one priority value is automatically determined according to the rule for automatically determining a priority value (156).

6. Method according to one of the preceding claims, **characterized in that**, when generating the sequence data (54) for a production installation (A to C), an ordered list with identifiers for the production units (L1 to L5) is generated,
the identifiers (122) being ordered in the list on the basis of the suitability of the production installation (A) for carrying out the machining process (A10, A14) assigned to an identifier (122) according to the production data (50), preferably in descending sequence.

7. Method according to one of the preceding claims, **characterized in that** the production data (50) for the production units (L1 to L5) in each case indicate a time priority (Pt), which is a measure of the urgency of the machining of the production unit (L1 to L5),
and **in that** the sequence data (54) are also generated in dependence on the time priority (Pt).

8. Method according to Claim 7, **characterized in that** an additional rule for automatically taking the time priority (Pt) into account is established, and **in that** the sequence data (54) are generated with the additional rule automatically taken into account (158).

9. Method according to Claim 8, **characterized in that**, according to the additional rule, a threshold value for the time priority (Pt) is taken into account, and **in that** a production unit (L1 to L5) for which the time priority (Pt) overshoots the threshold value in the case of large values for high time priorities or undershoots the threshold value in the case of small values for high time priorities is automatically placed at the beginning or the end of the machining sequence,
or **in that**, according to the additional rule, the time priority values of two production units (L1, L5) are determined,
**in that** a measure of the deviation of the priority values is determined in dependence on the two priority values,
**in that** a threshold value for the generation of the priority values is taken into account,
and **in that** a change of the machining sequence preset by the time priority values is only allowed if the determined deviation is less than the threshold value in the case of large values for high time priorities or is greater than the threshold value in the case of small values for high time priorities.

10. Method according to one of the preceding claims, **characterized in that** the production units (L1 to L5) are semifinished products for the production of integrated circuits, in particular semiconductor wafers, and/or **in that** the production installations (A to C) are installations for depositing material, preferably etching installations, and/or **in that** the production installations (A to C) are installations for applying layers, preferably with the aid of a chemical depositing process from the gas phase or the aid of a physical depositing process from the gas phase, and/or **in that** the production installations (A to C) are installations for ion implantation,
and/or **in that** the production installations (A to C) are installations for irradiating resist layers, in particular for exposure,
and/or **in that** the production installations (A to C) are installations for cleaning semiconductor wafers.

11. Method according to one of the preceding claims, **characterized in that** the production units (L1 to L5) are fed to the production installations (A to C) in dependence on the sequence data (54),
and/or **in that**, with the feeding of a production unit (L1 to L5) into a production installation (A to C), at least one identifier datum of a production unit (L1 to L5) is removed from the sequence data (54) or is marked as invalid.

12. Apparatus (200), in particular a data processing installation, for presetting a machining sequence, for carrying out the method according to one of Claims 1 to 11, with a production data presetting unit (202), which presets production data (50), the production data (50) indicating for a number of production units (L1 to L5) to be machined in each case one of at least two different machining processes (A10, A14),
with a priority data presetting unit (204), which presets qualitative priority data (52), the qualitative priority data (52) indicating to what extent a number of production installations (A to C) that can be alternatively used for carrying out the machining processes (A10, A14) are suitable for carrying out a machining process (A10, A14),
and with a machining unit (212, 218), which generates sequence data (54) in dependence on the production data (50) and the qualitative priority data (52), the sequence data (54) indicating a machining sequence for the machining of the production units (L1 to L5) that is specific to the production installations.

## Claims (Claims for the following Contracting State(s): FR, IT)

1. Method for presetting a machining sequence (54), comprising the following steps, performed with the aid of an apparatus:
presetting production data (50), which indicate for a number of production units (L1 to L5) to be machined in each case one of at least two different machining processes (A10, A14) (152),
presetting qualitative priority data (52), which indicate to what extent a number of production installations (A to C) that can be alternatively used for carrying out the machining processes (A10, A14) are suitable for carrying out a machining process (A10, A14) (154),
automatically generating sequence data (54) in dependence on the production data (50) and the qualitative priority data (52), the sequence data (54) indicating specifically with respect to the production installations a machining sequence for the machining of the production units (L1 to L5), storing and/or outputting the sequence data (54; 158), the qualitative priority data (52) taking the production quality into account.

2. Method according to Claim 1, **characterized by** the following steps:
storing the production data (50) in a memory unit (228) of the apparatus (200),
and storing the qualitative priority data (52) in a memory unit (228) of the apparatus (200).

3. Method according to Claim 1 or 2, **characterized in that** the production data contain identifiers (72) for the production units (L1 to L5) and identifiers (72), assigned to the identifiers (72), for the machining process (A10, A14).

4. Method according to one of the preceding claims, **characterized in that** the qualitative priority data (52) contain priority values, which are respectively assigned to production installations (A to C) and a machining process (A10, A14), preferably in the form of a matrix, in the form of rows of a matrix or in the form of columns of a matrix.

5. Method according to Claim 4, **characterized in that** a rule for automatically determining a priority value for a production installation (A to C) and for a machining process (A10, A14) from priority values known for the production installation (A to C) is preset for other machining processes (A23), and **in that** at least one priority value is automatically determined according to the rule for automatically determining a priority value (156).

6. Method according to one of the preceding claims, **characterized in that**, when generating the sequence data (54) for a production installation (A to C), an ordered list with identifiers for the production units (L1 to L5) is generated,
the identifiers (122) being ordered in the list on the basis of the suitability of the production installation (A) for carrying out the machining process (A10, A14) assigned to an identifier (122) according to the production data (50), preferably in descending sequence.

7. Method according to one of the preceding claims, **characterized in that** the production data (50) for the production units (L1 to L5) in each case indicate a time priority (Pt), which is a measure of the urgency of the machining of the production unit (L1 to L5),
and **in that** the sequence data (54) are also generated in dependence on the time priority (Pt).

8. Method according to Claim 7, **characterized in that** an additional rule for automatically taking the time priority (Pt) into account is established, and **in that** the sequence data (54) are generated with the additional rule automatically taken into account (158).

9. Method according to Claim 8, **characterized in that**, according to the additional rule, a threshold value for the time priority (Pt) is taken into account, and **in that** a production unit (L1 to L5) for which the time priority (Pt) overshoots the threshold value in the case of large values for high time priorities or undershoots the threshold value in the case of small values for high time priorities is automatically placed at the beginning or the end of the machining sequence,
or **in that**, according to the additional rule, the time priority values of two production units (L1, L5) are determined,
**in that** a measure of the deviation of the priority values is determined in dependence on the two priority values,
**in that** a threshold value for the generation of the priority values is taken into account,
and **in that** a change of the machining sequence preset by the time priority values is only allowed if the determined deviation is less than the threshold value in the case of large values for high time priorities or is greater than the threshold value in the case of small values for high time priorities.

10. Method according to one of the preceding claims, **characterized in that** the production units (L1 to L5) are semifinished products for the production of integrated circuits, in particular semiconductor wafers, and/or **in that** the production installations (A to C) are installations for depositing material, preferably etching installations, and/or **in that** the production installations (A to C) are installations for applying layers, preferably with the aid of a chemical depositing process from the gas phase or the aid of a physical depositing process from the gas phase, and/or **in that** the production installations (A to C) are installations for ion implantation,
and/or **in that** the production installations (A to C) are installations for irradiating resist layers, in particular for exposure,
and/or **in that** the production installations (A to C) are installations for cleaning semiconductor wafers.

11. Method according to one of the preceding claims, **characterized in that** the production units (L1 to L5) are fed to the production installations (A to C) in dependence on the sequence data (54),
and/or **in that**, with the feeding of a production unit (L1 to L5) into a production installation (A to C), at least one identifier datum of a production unit (L1 to L5) is removed from the sequence data (54) or is marked as invalid.

12. Apparatus (200), in particular a data processing installation, for presetting a machining sequence, for carrying out the method according to one of Claims 1 to 11, with a production data presetting unit (202), which presets production data (50), the production data (50) indicating for a number of production units (L1 to L5) to be machined in each case one of at least two different machining processes (A10, A14),
with a priority data presetting unit (204), which presets qualitative priority data (52), the qualitative priority data (52) indicating to what extent a number of production installations (A to C) that can be alternatively used for carrying out the machining processes (A10, A14) are suitable for carrying out a machining process (A10, A14),
and with a machining unit (212, 218), which generates sequence data (54) in dependence on the production data (50) and the qualitative priority data (52), the sequence data (54) indicating a machining sequence for the machining of the production units (L1 to L5) that is specific to the production installations.

## Revendications (Revendications pour l'(les) Etat(s) contractant(s) suivant(s): DE)

1. Procédé pour prescrire une séquence d'usinage (54) avec les étapes suivantes réalisées à l'aide d'un dispositif :
prescription de données de fabrication (50) qui indiquent (152) pour plusieurs unités de fabrication à usiner (L1 à L5) à chaque fois un des deux ou plus processus d'usinage différents (A10, A14),
prescription de données de priorité qualitatives (52) qui indiquent dans quelle mesure plusieurs installations de fabrication (A à C) utilisables comme alternatives pour la mise en oeuvre des processus d'usinage (A10, A14) conviennent (154) à la mise en oeuvre d'un processus d'usinage (A10, A14),
production automatique de données de séquence (54) en fonction des données de fabrication (50) et des données de priorité qualitatives (52), les données de séquence (54) indiquant, par rapport aux installations de fabrication, une séquence d'usinage pour l'usinage des unités de fabrication (L1 à L5),
mémorisation et/ou sortie des données de séquence (54 ; 158), les données de priorité qualitatives (52) étant produites par une comparaison des rendements, par une comparaison de la densité des défauts ou par une combinaison de ces deux comparaisons.

2. Procédé selon la revendication 1, **caractérisé par** les étapes de :
mémorisation des données de fabrication (50) dans une unité de mémorisation (228) du dispositif (200),
et mémorisation des données de priorité qualitatives (52) dans une unité de mémorisation (228) du dispositif (200).

3. Procédé selon la revendication 1 ou 2, **caractérisé par le fait que** les données de fabrication contiennent des identificateurs (72) pour les unités de fabrication (L1 à L5) et des identificateurs (74); associés aux identificateurs (72), pour le processus d'usinage (A10, A14).

4. Procédé selon l'une des revendications précédentes, **caractérisé par le fait que** les données de priorité qualitatives (52) contiennent des valeurs de priorité qui sont associées à chaque fois à une installation de fabrication (A à C) et à un processus d'usinage (A10, A14), de préférence sous la forme d'une matrice, sous la forme de lignes d'une matrice ou sous la forme de colonnes d'une matrice.

5. Procédé selon la revendication 4, **caractérisé par le fait que**
une règle pour la détermination automatique d'une valeur de priorité pour une installation de fabrication (A à C) et pour un processus d'usinage (A10, A14) est prescrite à partir de valeurs de priorité, connues pour l'installation de fabrication (A à C), pour d'autres processus d'usinage (A23),
et au moins une valeur de priorité est déterminée (156) automatiquement selon la règle destinée à la détermination automatique d'une valeur de priorité.

6. Procédé selon l'une des revendications précédentes, **caractérisé par le fait que**
lors de la production des données de séquence (54) pour une installation de fabrication (A à C), on produit une liste ordonnée avec des identificateurs pour les unités de fabrication (L1 à L5),
et les identificateurs (122) dans la liste sont ordonnés selon l'aptitude de l'installation de fabrication (A) à la mise en oeuvre du processus d'usinage (A10, A14) associé à un identificateur (122) selon les données de fabrication (50), de préférence dans l'ordre décroissant.

7. Procédé selon l'une des revendications précédentes, **caractérisé par le fait que**
les données de fabrication (50) pour les unités de fabrication (L1 à L5) indiquent à chaque fois une priorité temporelle (Pt) qui est une mesure de l'urgence de l'usinage de l'unité de fabrication (L1 à L5),
et les données de séquence (54) sont aussi produites en fonction de la priorité temporelle (Pt).

8. Procédé selon la revendication 7, **caractérisé par le fait que**
une règle supplémentaire destinée à la prise en compte automatique de la priorité temporelle (Pt) est spécifiée,
et les données de séquence (54) sont produites (158) en respectant automatiquement la règle supplémentaire.

9. Procédé selon la revendication 8, **caractérisé par le fait que**
selon la règle supplémentaire, une valeur de seuil pour la priorité temporelle (Pt) est prise en compte,
et une unité de fabrication (L1 à L5) dont la priorité temporelle (Pt) est supérieure à la valeur de seuil en présence de grandes valeurs pour des priorités temporelles élevées ou est inférieure à la valeur de seuil en présence de petites valeurs pour des priorités temporelles élevées est placée automatiquement au début ou à la fin de la séquence d'usinage,
ou, selon la règle supplémentaire, les valeurs de priorités temporelles de deux unités de fabrication (L1, L2) sont déterminées,
en fonction des deux valeurs de priorités, une mesure pour l'écart des valeurs de priorités est déterminée,
une valeur de seuil pour la production des valeurs de priorités est prise en compte,
et une modification de la séquence d'usinage prescrite par les valeurs de priorités temporelles n'est autorisée que si l'écart déterminé est, en présence de grandes valeurs pour des priorités temporelles élevées, inférieur à la valeur de seuil ou, en présence de petites valeurs pour des priorités temporelles élevées, supérieur à la valeur de seuil.

10. Procédé selon l'une des revendications précédentes, **caractérisé par le fait que**
les unités de fabrication (L1 à L5) sont des produits semi-finis pour la fabrication de circuits intégrés, notamment de tranches de semi-conducteurs,
et/ou les installations de fabrication (A à C) sont des installations pour l'enlèvement de matière, de préférence des installations de gravure,
et/ou les installations de fabrication (A à C) sont des installations pour l'application de couches, de préférence à l'aide d'un procédé de dépôt chimique à partir d'une phase gazeuse ou à l'aide d'un procédé de dépôt physique à partir d'une phase gazeuse,
et/ou les installations de fabrication (A à C) sont des installations pour l'implantation d'ions,
et/ou les installations de fabrication (A à C) sont des installations pour l'irradiation de couches de résist notamment pour leur exposition à la lumière,
et/ou les installations de fabrication (A à C) sont des installations pour le nettoyage de tranches de semi-conducteurs.

11. Procédé selon l'une des revendications précédentes, **caractérisé par le fait que**
les unités de fabrication (L1 à L5) sont envoyées aux installations de fabrication (A à C) en fonction des données de séquence (54),
et/ou, avec l'envoi d'une unité de fabrication (L1 à L5) dans une installation de fabrication (A à C), au moins une donnée d'identificateur d'une unité de fabrication (L1 à L5) est retirée des données de séquence (54) ou est marquée comme invalide.

12. Dispositif (200), notamment installation de traitement de données, pour prescrire une séquence d'usinage, en vue de la mise en oeuvre du procédé selon l'une des revendications 1 à 11,
comprenant une unité de prescription de données de fabrication (202) qui prescrit des données de fabrication (50), les données de fabrication (50) indiquant pour plusieurs unités de fabrication à usiner (L1 à L5) à chaque fois un des deux ou plus processus d'usinage différents (A10, A14),
comprenant une unité de prescription de données de priorité (204) qui prescrit des données de priorité qualitatives (52), les données de priorité qualitatives (52) indiquant dans quelle mesure plusieurs installations de fabrication (A à C) utilisables comme alternatives pour la mise en oeuvre des processus d'usinage (A10, A14) conviennent à la mise en oeuvre d'un processus d'usinage (A10, A14),
et comprenant une unité de traitement (212, 218) qui produit des données de séquence (54) en fonction des données de fabrication (50) et des données de priorité qualitatives (52), les données de séquence (54) indiquant une séquence d'usinage, par rapport aux installations de fabrication, pour l'usinage des unités de fabrication (L1 à L5).

## Revendications (Revendications pour l'(les) Etat(s) contractant(s) suivant(s): FR, IT)

1. Procédé pour prescrire une séquence d'usinage (54) avec les étapes suivantes réalisées à l'aide d'un dispositif :
prescription de données de fabrication (50) qui indiquent (152) pour plusieurs unités de fabrication à usiner (L1 à L5) à chaque fois un des deux ou plus processus d'usinage différents (A10, A14),
prescription de données de priorité qualitatives (52) qui indiquent dans quelle mesure plusieurs installations de fabrication (A à C) utilisables comme alternatives pour la mise en oeuvre des processus d'usinage (A10, A14) conviennent (154) à la mise en oeuvre d'un processus d'usinage (A10, A14),
production automatique de données de séquence (54) en fonction des données de fabrication (50) et des données de priorité qualitatives (52), les données de séquence (54) indiquant, par rapport aux installations de fabrication, une séquence d'usinage pour l'usinage des unités de fabrication (L1 à L5),
mémorisation et/ou sortie des données de séquence (54 ; 158), les données de priorité qualitatives (52) prenant en compte la qualité de fabrication.

2. Procédé selon la revendication 1, **caractérisé par** les étapes de :
mémorisation des données de fabrication (50) dans une unité de mémorisation (228) du dispositif (200),
et mémorisation des données de priorité qualitatives (52) dans une unité de mémorisation (228) du dispositif (200).

3. Procédé selon la revendication 1 ou 2, **caractérisé par le fait que** les données de fabrication contiennent des identificateurs (72) pour les unités de fabrication (L1 à L5) et des identificateurs (74), associés aux identificateurs (72), pour le processus d'usinage (A10, A14). ,

4. Procédé selon l'une des revendications précédentes, **caractérisé par le fait que** les données de priorité qualitatives (52) contiennent des valeurs de priorité qui sont associées à chaque fois à une installation de fabrication (A à C) et à un processus d'usinage (A10, A14), de préférence sous la forme d'une matrice, sous la forme de lignes d'une matrice ou sous la forme de colonnes d'une matrice.

5. Procédé selon la revendication 4, **caractérisé par le fait que**
une règle pour la détermination automatique d'une valeur de priorité pour une installation de fabrication (A à C) et pour un processus d'usinage (A10, A14) est prescrite à partir de valeurs de priorité, connues pour l'installation de fabrication (A à C), pour d'autres processus d'usinage (A23),
et au moins une valeur de priorité est déterminée (156) automatiquement selon la règle destinée à la détermination automatique d'une valeur de priorité.

6. Procédé selon l'une des revendications précédentes, **caractérisé par le fait que**
lors de la production des données de séquence (54) pour une installation de fabrication (A à C), on produit une liste ordonnée avec des identificateurs pour les unités de fabrication (L1 à L5),
et les identificateurs (122) dans la liste sont ordonnés selon l'aptitude de l'installation de fabrication (A) à la mise en oeuvre du processus d'usinage (A10, A14) associé à un identificateur (122) selon les données de fabrication (50), de préférence dans l'ordre décroissant.

7. Procédé selon l'une des revendications précédentes, **caractérisé par le fait que**
les données de fabrication (50) pour les unités de fabrication (L1 à L5) indiquent à chaque fois une priorité temporelle (Pt) qui est une mesure de l'urgence de l'usinage de l'unité de fabrication (L1 à L5),
et les données de séquence (54) sont aussi produites en fonction de la priorité temporelle (Pt).

8. Procédé selon la revendication 7, **caractérisé par le fait que**
une règle supplémentaire destinée à la prise en compte automatique de la priorité temporelle (Pt) est spécifiée,
et les données de séquence (54) sont produites (158) en respectant automatiquement la règle supplémentaire.

9. Procédé selon la revendication 8, **caractérisé par le fait que**
selon la règle supplémentaire, une valeur de seuil pour la priorité temporelle (Pt) est prise en compte,
et une unité de fabrication (L1 à L5) dont la priorité temporelle (Pt) est supérieure à la valeur de seuil en présence de grandes valeurs pour des priorités temporelles élevées ou est inférieure à la valeur de seuil en présence de petites valeurs pour des priorités temporelles élevées est placée automatiquement au début ou à la fin de la séquence d'usinage,
ou, selon la règle supplémentaire, les valeurs de priorités temporelles de deux unités de fabrication (L1, L2) sont déterminées,
en fonction des deux valeurs de priorités, une mesure pour l'écart des valeurs de priorités est déterminée,
une valeur de seuil pour la production des valeurs de priorités est prise en compte,
et une modification de la séquence d'usinage prescrite par les valeurs de priorités temporelles n'est autorisée que si l'écart déterminé est, en présence de grandes valeurs pour des priorités temporelles élevées, inférieur à la valeur de seuil
ou, en présence de petites valeurs pour des priorités temporelles élevées, supérieur à la valeur de seuil.

10. Procédé selon l'une des revendications précédentes, **caractérisé par le fait que**
les unités de fabrication (L1 à L5) sont des produits semi-finis pour la fabrication de circuits intégrés, notamment de tranches de semi-conducteurs,
et/ou les installations de fabrication (A à C) sont des installations pour l'enlèvement de matière, de préférence des installations de gravure,
et/ou les installations de fabrication (A à C) sont des installations pour l'application de couches, de préférence à l'aide d'un procédé de dépôt chimique à partir d'une phase gazeuse ou à l'aide d'un procédé de dépôt physique à partir d'une phase gazeuse,
et/ou les installations de fabrication (A à C) sont des installations pour l'implantation d'ions,
et/ou les installations de fabrication (A à C) sont des installations pour l'irradiation de couches de résist notamment pour leur exposition à la lumière,
et/ou les installations de fabrication (A à C) sont des installations pour le nettoyage de tranches de semi-conducteurs.

11. Procédé selon l'une des revendications précédentes,
**caractérisé par le fait que**
les unités de fabrication (L1 à L5) sont envoyées aux installations de fabrication (A à C) en fonction des données de séquence (54),
et/ou, avec l'envoi d'une unité de fabrication (L1 à L5) dans une installation de fabrication (A à C), au moins une donnée d'identificateur d'une unité de fabrication (L1 à L5) est retirée des données de séquence (54) ou est marquée comme invalide.

12. Dispositif (200), notamment installation de traitement de données, pour prescrire une séquence d'usinage, en vue de la mise en oeuvre du procédé selon l'une des revendications 1 à 11,
comprenant une unité de prescription de données de fabrication (202) qui prescrit des données de fabrication (50), les données de fabrication (50) indiquant pour plusieurs unités de fabrication à usiner (L1 à L5) à chaque fois un des deux ou plus processus d'usinage différents (A10, A14),
comprenant une unité de prescription de données de priorité (204) qui prescrit des données de priorité qualitatives (52), les données de priorité qualitatives (52) indiquant dans quelle mesure plusieurs installations de fabrication (A à C) utilisables comme alternatives pour la mise en oeuvre des processus d'usinage (A10, A14) conviennent à la mise en oeuvre d'un processus d'usinage (A10, A14),
et comprenant une unité de traitement (212, 218) qui produit des données de séquence (54) en fonction des données de fabrication (50) et des données de priorité qualitatives (52), les données de séquence (54) indiquant une séquence d'usinage, par rapport aux installations de fabrication, pour l'usinage des unités de fabrication (L1 à L5).
